Europäisches Patentamt

European Patent Office

Office européen des brevets

(11) Publication number: **0 266 084 B1**

# EUROPEAN PATENT SPECIFICATION

(45) Date of publication of patent specification: 17.07.91  (51) Int. Cl.⁵: **B60J 5/04**

(21) Application number: 87308983.3

(22) Date of filing: 12.10.87

(54) **Shock absorbing member for car body.**

(30) Priority: 27.10.86 JP 253782/86

(43) Date of publication of application:
04.05.88 Bulletin 88/18

(45) Publication of the grant of the patent:
17.07.91 Bulletin 91/29

(84) Designated Contracting States:
DE IT

(56) References cited:
EP-A- 0 057 270
EP-A- 0 063 325
FR-A- 2 258 280
US-A- 3 938 288

(73) Proprietor: **MITSUI & CO., LTD.**
**2-1, Ohtemachi 1-chome**
**Chiyoda-ku Tokyo 100(JP)**

Proprietor: **Tube Forming Co.,Ltd.**
**15-12 Fukuura 2-chome Kanazawa-ku**
**Yokohama-shi(JP)**

(72) Inventor: **Fukazawa, Kazuhito**
**30-5, Konan 3-chome Konan-ku**
**Yokohama-shi(JP)**

(74) Representative: **Carpenter, David**
**MARKS & CLERK Alpha Tower Suffolk Street**
**Queensway**
**Birmingham B1 1TT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a structural member of automobile bodies, and more particularly to a shock absorbing member which is mounted in a car door to absorb the impact caused by collision, for protection purpose.

In a car body of a front engine type where the engine compartment provides sufficient space between the front end of the car body and the driver's seat, the shock of a frontal collision is absorbed by the engine compartment. The driver is therefore protected to a certain extent from being subjected to direct impact in collision. However, in the event of a side collision there is a high probability that the occupants will be subjected to direct impact as there is a door alone for protection and the door is often bent inwardly resulting in injury to the driver or passengers.

The door of a car is generally restricted in thickness in order to reserve as much space as possible inside the car, and also is restricted in its internal area so as to be able to accommodate a lock mechanism, the mechanism of raising/lowering the side window glass, a driving motor thereof, as like components. The size and weight of a member to reinforce the door should be small in order to maximise the space and to minimize the weight of the car body, and thus often the door is theretofore left prone to impacts.

There have been proposed various structural materials for the reinforcement member of a car door which are small in volume and yet can withstand heavy loads. One such prior proposal is shown in US-A-3938288 where a pair of plate-like elements are spaced apart by a corrugated member.

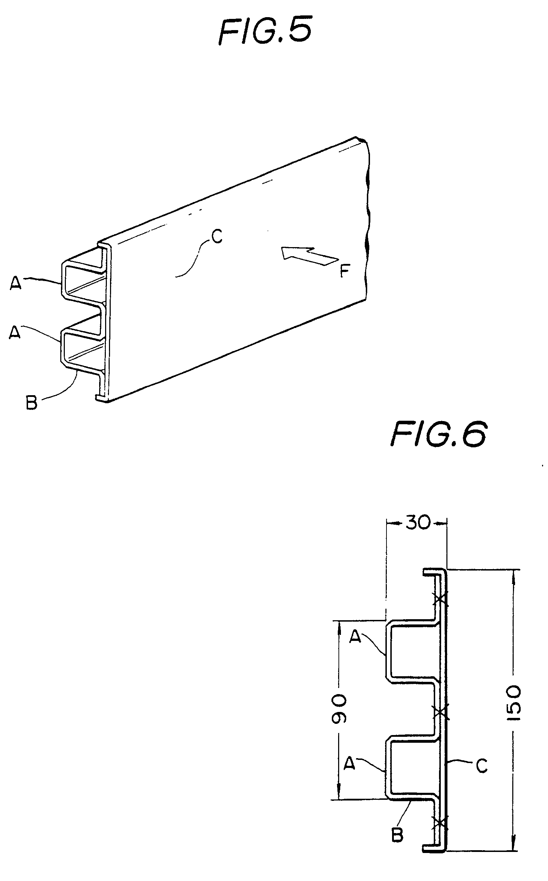

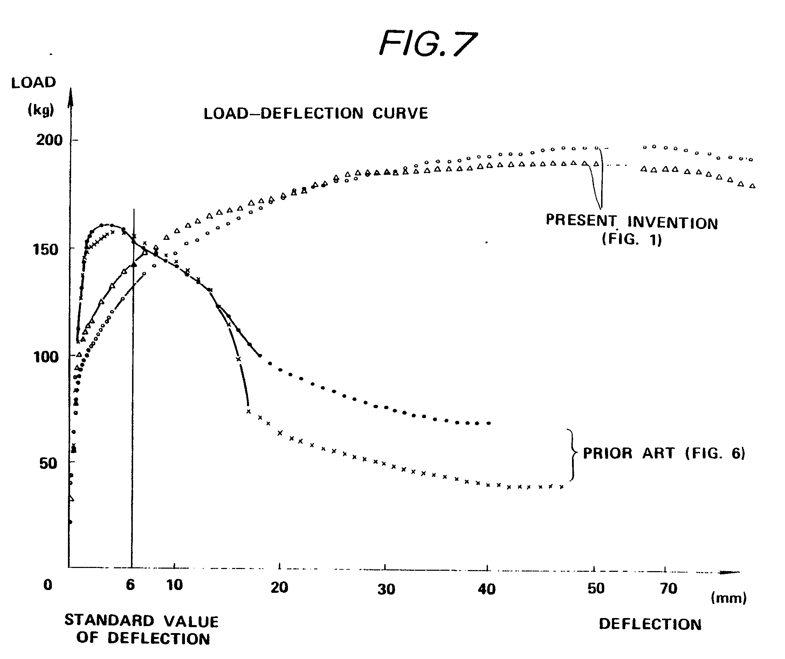

Figures 5 and 6 show another example of a prior art member wherein a shaped steel B having flanges and two channelled portions A, A is welded at the locations marked with X to a plate member C having bent ends. Such prior art members are arranged to be strong against forces in the direction marked with an arrow F as shown in Figure 5 even if the cross-section thereof is flat, and are mounted as beams inside of a door to resist external impact.

A deflection test was conducted to examine the bending strength of a prior art reinforcement member by using a member having the dimensions as shown in Figure 6. As shown in Figure 7, (a graph plotted with marks ● and x), the sample could stand the loads up to a certain level of load (ca. 160 kg) without deflection, but became deflected rapidly after reaching the standard deflection value (6 mm) to the extent that the door was folded inwardly. Clearly, the door cannot protect passengers at this point.

The above is observed to present similar problems not only in the side doors of a car but also in the front of a one-box type car, or in the rear of a two-box type car.

The present invention seeks to eliminate these defects encountered in the prior art and aims to provide a shock absorbing member which has a cross-section small enough to be assembled in a narrow space, and yet does not rapidly yield to impact loads so affording protection to the vehicle occupants.

In accordance with the present invention there is provided a shock absorbing member for a car body, comprising a first flat plate member for receiving impact loads, a second flat plate member positioned parallel to but spaced from said first flat plate member, and, first and second corrugated members connected to the first and second flat plate members and extending therebetween with their corrugations extending perpendicular to the first and second flat plate members, the flat plate members and the corrugated members being so disposed that the shock absorbing member has a box-like cross-section.

In the accompanying drawings:-

Figure 1 is a partially cutaway perspective view of a shock absorbing member in accordance with an embodiment of this invention;

Figure 2 is a schematic view to show how the shock absorbing member of Figure 1 may be mounted in a car door;

Figure 3 is an explanatory view to show the deformation on the shock absorbing member when it is subjected to a load;

Figure 4 is a perspective view of a shock absorbing member similar to that disclosed in US-A-3938288;

Figure 5 is a perspective view to partially show a prior art shock absorbing member;

Figure 6 is a cross-section thereof; and

Figure 7 is a graph to show the load deflection curves obtained from a test in order to compare deflection between the prior art construction of Figures 5 and 6 and an embodiment of the present invention of the kind illustrated in Figures 1 to 3.

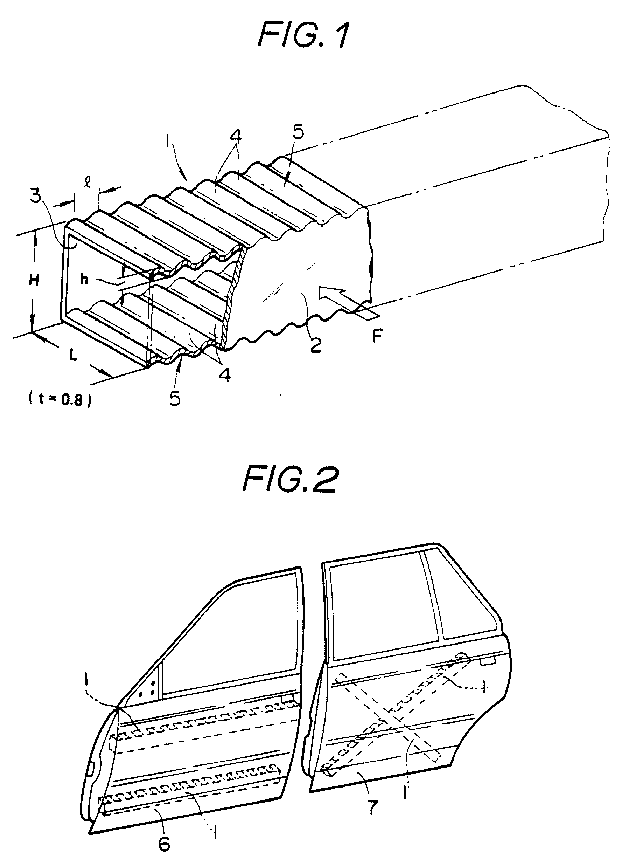

This invention will now be described by referring to the embodiment shown in Figures 1 through 3.

Figure 1 shows the shock absorbing member partially cut away. In the figure, the member comprises a flat plate member 2 which receives loads, and another flat plate member 3 which is provided parallel to the first flat plate member at a predetermined spacing therefrom. The two flat members are interconnected by corrugated plates 5 which are provided with a large number of folds or corrugations 4, 4, .... The corrugated plates 5 are attached to the plate members 2, 3 in such a manner that the ridges of the folds 4, 4, ... thereon are perpendicular to the surfaces of the plate members 2, 3.

Figure 1 shows a shaped member having a box-like cross-section which is formed by bulging a square pipe so as to make two opposing surfaces thereof corrugated. More specifically, a pair of bulging moulds are corrugated on the bottoms thereof and attached together to form a mould. A square pipe material is inserted through the coupled moulds, and fluid is forced into the pipe under high pressure to bulge the pipe to corrugate the opposing two surfaces. Such a process can readily produce the embodiment shown in Figure 1 having folds 4, 4, ... on the two opposing surfaces.

Such a moulding method is suitable for mass production which can produce the members at low cost.

Besides the aforementioned method, corrugated plates 5, 5 may be moulded separately, and then attached to flat plate members 2, 3 by welding in a manner to have a boxlike cross-section.

The dimensions of the embodiment shown in Figure 1 are denoted by the letters t, H, L, h, and $\ell$ indicating the thickness t is 0.8 mm, the height H is 20 mm, the width L is 27 mm, the amplitude h is 3 mm and the inter-ridge interval $\ell$ is 6.3 mm.

The shock absorbing members 1 structured in the aforementioned manner may be provided inside the spaces of car doors 6, 7 as beams in the horizontal direction as shown in the left door 6 or in a manner of a cross as shown in the right door 7 in Figure 2.

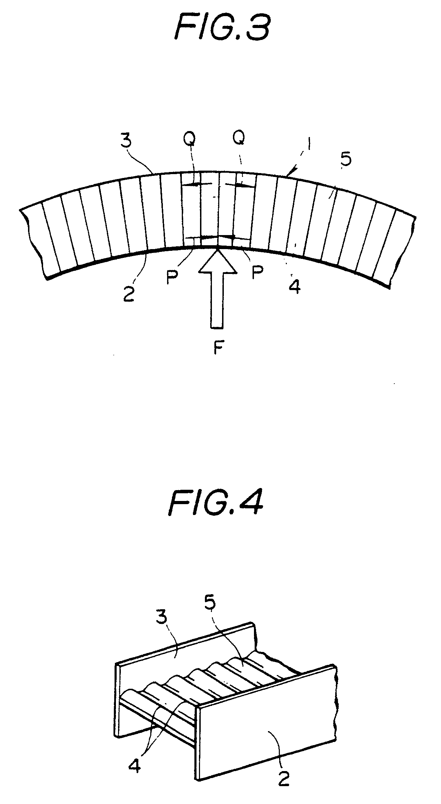

In a collision the shock absorbing members 1 provided inside the door 6, 7 receive impact on the flat plate member 2 in the direction marked with F in Figures 1 and 3 when another car collides with the car from outside of the doors 6, 7. When an impact force F is applied on the plate member 2, a compressive stress P is generated on the side of the plate member 2 while a tensile stress is generated on the plate member 3 at the other side. These forces propagate along the corrugated surface of the plate 5 to cause the plate member 2 contract in such a manner as to bring folds 4, 4, ... closer to each other and to extend the plate member 3 to separate the same from each other. The deformation on the respective folds 4, 4, ... deflects the plates in the form of a fan as shown in Figure 3.

This can evenly distribute the stress caused by the impact at collision via the folds 4, 4, ... without concentrating it locally to thereby prevent the member from being folded twice.

The shock absorbing member shown in Figure 1 demonstrated by a test (as indicated with O and △ marks in the graph of Figure 7) that the bearable load does not decrease even after the standard deflection value (6 mm) is reached, and deflection increases with the increase in load to thereby avoid abrupt folding.

It will be recognised therefore that in a shock absorbing member as described with reference to Figures 1 to 3 there is a flat plate member to receive impact loads, a flat plate provided in parallel to the first flat plate member at a predetermined interval, and corrugated members which are connected to the plate members so that the fold ridges thereof run perpendicular to the surfaces of the plates. Due to this advantageous structure, if the plate members are positioned to face the side which receives impact, the folded surfaces can evenly distribute the deflection impact when an impact load is applied thereon be deforming the corrugated plate in the form of a fan to thereby prevent localized abrupt folding of the member.

Thus if the member is used as a reinforcement material for a car door, it can effectively protect passengers in the event of a collision.

As the shock absorbing member can be simply moulded by bulging process, it can be manufactured in mass production at low cost.

The application of the shock absorbing member is naturally not limited to door reinforcements, but may be applied in other fields to achieve similar effects.

## Claims

1. A shock absorbing member (1) for a car body, comprising a first flat plate member (2) for receiving impact loads, a second flat plate member (3) positioned parallel to but spaced from said first plate member (2), and, a corrugated member (5) connected to the first and second flat plate members (2, 3) and extending therebetween with its corrugations (4) extending perpendicular to the first and second flat plate members (2, 3), the shock absorbing member (1) being characterized by a further corrugated member (5) also connected to the first and second flat plate members (2, 3) and extending therebetween with its corrugations extending perpendicular to the flat plate members (2, 3) and by the flat plate members (2, 3) and the corrugated members (5) being so disposed that the shock absorbing member (1) has a box-like cross-section.

## Revendications

1. Un dispositif amortisseur de choc (1) pour une carrosserie de voiture automobile, comprenant un premier élément plat en forme de plaque (2) destiné à capter des charges d'impact, un second élément plat en forme de plaque (3), parallèle audit premier élément en forme de plaque mais espacé par rapport à celui-ci, ainsi qu'un élément ondulé (5) relié au premier et au second élément plat en forme de plaque (2, 3) et s'étendant entre ceux-ci avec ses ondulations (4) s'étendant perpendiculairement au premier et au second élément plat en forme de plaque (2, 3), le dispositif amortisseur de choc (1) étant caractérisé par un élément ondulé supplémentaire (5), également relié au premier et au second élément plat en forme de plaque (2, 3) avec ses ondulations s'étendant perpendiculairement par rapport aux éléments plats en forme de plaque et en ce que les éléments plats en forme de plaque (2, 3) et les éléments ondulés (5) sont disposés de sorte que le dispositif amortisseur de choc (1) a une section transversale en forme de boîte.

**Patentansprüche**

1. Stoßdämpfendes Bauelement (1) für eine Autokarosserie, mit einem ersten flachen Plattenteil (2) zum Aufnehmen von Stoßbelastungen, einem parallel zu, aber in einem Abstand von dem ersten Plattenteil (2) angeordneten zweiten flachen Plattenteil (3) und einem mit dem ersten und zweiten flachen Plattenteil (2, 3) verbundenen und sich dazwischen erstrekkenden geriffelten Teil (5), dessen Riffeln (4) sich senkrecht zu dem ersten und zweiten flachen Plattenteil (2, 3) erstrecken, wobei das stoßdämpfende Bauelement (1) gekennzeichnet ist durch ein ebenfalls mit dem ersten und zweiten flachen Plattenteil (2, 3) verbundenen und sich dazwischen erstreckenden weiteren geriffelten Teil (5), dessen Riffeln sich senkrecht zu den flachen Plattenteilen (2, 3) erstrekken, wobei die flachen Plattenteile (2, 3) und die geriffelten Teile (5) so vorgesehen sind, daß das stoßdämpfende Bauelement (1) einen kastenförmigen Querschnitt aufweist.

## FIG. 1

## FIG.2

FIG.3

FIG.4

## FIG.5

## FIG.6

# FIG. 7

LOAD
(kg)

LOAD–DEFLECTION CURVE

200

PRESENT INVENTION
(FIG. 1)

150

100

PRIOR ART (FIG. 6)

50

0    6   10        20        30        40        50      70
                                                      (mm)

STANDARD VALUE
OF DEFLECTION

DEFLECTION

EP 0 266 084 B1